(19) Europäisches Patentamt / European Patent Office / Office européen des brevets

(11) **EP 4 299 466 A1**

# (12) EUROPEAN PATENT APPLICATION
published in accordance with Art. 153(4) EPC

(43) Date of publication:
**03.01.2024 Bulletin 2024/01**

(21) Application number: **22804501.9**

(22) Date of filing: **21.04.2022**

(51) International Patent Classification (IPC):
**B65D 65/40** (2006.01)    **B65D 81/24** (2006.01)
**B65D 81/34** (2006.01)

(52) Cooperative Patent Classification (CPC):
**B65D 65/40; B65D 81/24; B65D 81/34**

(86) International application number:
**PCT/JP2022/018431**

(87) International publication number:
**WO 2022/244587 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.05.2021 JP 2021083264
17.05.2021 JP 2021083267**

(71) Applicant: **TOPPAN INC.
Tokyo 110-0016 (JP)**

(72) Inventors:
- **TANAKA, Ryo
Tokyo 110-0016 (JP)**
- **NAGAI, Aki
Tokyo 110-0016 (JP)**

(74) Representative: **TBK
Bavariaring 4-6
80336 München (DE)**

(54) **PACKAGING MATERIAL FILM, PACKAGING MATERIAL, PACKAGING BAG, AND PACKAGE BODY**

(57)    The present disclosure relates to a packaging material film including a first resin layer that contains a polyolefin resin and fillers. In a first embodiment, protrusions are formed on a surface of the first resin layer by the fillers, and a water sliding angle at room temperature of an oil film on the surface of the first resin layer as measured by the following measurement method is 20° or less. In a second embodiment, a ratio Y/X of a surface area ratio Y of a surface of the first resin layer with respect to an arithmetic mean height Sa X $\mu$m of the surface of the first resin layer is 0.4 to 8.0 $\mu$m$^{-1}$.

(Measurement method)

A packaging bag is formed by using a packaging material including a substrate and a packaging material film such that a first resin layer is disposed on an inner side thereof. An oil-in-water dispersion-type content is enclosed in the packaging bag to form a package body, and the package body is subjected to a retort treatment and a boiling treatment. A water sliding angle at room temperature on an oil film formed on a surface of the first resin layer is measured using a contact angle meter under the conditions of a liquid amount of 20 $\mu$L and a speed of 90°/min.

Fig.2

## Description

**Technical Field**

The present invention relates to a packaging material film, a packaging material, a packaging bag, and a package body.

**Background Art**

A package body in which an oil-in-water dispersion-type content such as curry is enclosed is known. In such a package body, problems have been pointed out, for example, as follows: when the package body is opened and the content is discharged, the whole content cannot be used up to cause wastefulness, adhesion of the content causes contamination, and it takes a lot of trouble with a discharge operation of the content.

Therefore, the package body is required to allow the content to slip down easily when the package body is opened, that is, to impart excellent slip-down property to the content.

For example, in Patent Literature 1, it is proposed that, by a package body using a packaging sheet, which includes a heat seal layer containing polyolefin-based particles with an average particle diameter D50 of 10 to 50 $\mu$m and a melting point of 100°C to 180°C and having a surface roughness Ra of 1.00 to 7.00 $\mu$m, a content is less likely to adhere to the surface and is easily discharged from the package body.

**Citation List**

**Patent Literature**

Patent Literature 1: International Publication WO 2018/003978

**Summary of Invention**

**Technical Problem**

However, the package body described in Patent Literature 1 described above has the following problems.

That is, the package body described in Patent Literature 1 described above has room for improvement in terms of easiness of discharging the content when the package body is opened, that is, slip-down property.

The present invention has been made in view of the above circumstances, and an object thereof is to provide a packaging material film capable of imparting excellent slip-down property to an oil-in-water dispersion-type content by a heating treatment, and a packaging material, a packaging bag, and a package body that include the packaging material film. Note that, in the present invention, the oil-in-water dispersion-type content means a content which contains water and lipid and in which the contained amount of water is larger than the contained amount of lipid. The "lipid" is a concept inclusive of oil that is in a liquid state at 20°C (room temperature) and fat that is a solid at 20°C. Hereinafter, the above-described oil contained in the oil-in-water dispersion-type content and the above-described fat, which is liquefied by a heating treatment to which the packaging material film according to the present invention is subjected, are collectively referred to as "oil content".

**Solution to Problem**

In order to solve the above problems, an aspect of the present invention (first invention) is a packaging material film including a first resin layer that contains a polyolefin resin and fillers, in which protrusions are formed on a surface of the first resin layer by the fillers, and a water sliding angle at room temperature of an oil film on the surface of the first resin layer as measured by the following measurement method is 20° or less.

(Measurement method)

a) A packaging bag, which is formed by using a packaging material including a substrate and the packaging material film provided on the substrate such that the first resin layer is disposed on an inner side thereof, is prepared.
b) A package body including the packaging bag and an oil-in-water dispersion-type content enclosed in the packaging bag is prepared.

c) The package body is subjected to a retort treatment and a boiling treatment.
d) A water sliding angle at room temperature on an oil film formed on a surface of the first resin layer is measured using a contact angle meter under the conditions of a liquid amount of 20 μL and a speed of 90°/min.

According to this packaging material film, the polyolefin resin in the first resin layer can absorb the oil content and swell under the temperature conditions of the retort treatment or the boiling treatment. Therefore, when the packaging material film is used as a packaging material for a package body in which an oil-in-water dispersion-type content is enclosed and the heating treatment such as a retort treatment or a boiling treatment is performed in a state where the oil-in-water dispersion-type content is brought into contact with the surface of the first resin layer of the packaging material film, some of the oil content in the content is absorbed by the first resin layer. At this time, the water sliding angle at room temperature of the oil film on the surface of the first resin layer as measured by the above predetermined measurement method is 20° or less. That is, this means that the surface of the first resin layer on the side of the content has appropriate irregularities due to the fillers, the oil content contained in the content is absorbed by the first resin layer, and thus the lipophilicity of the first resin layer is improved. When the oil film exists on the surface of the first resin layer and the water sliding angle at room temperature of the oil film is 20° or less, the content is prevented from being in direct contact with the surface of the first resin layer, and the content whose surface portion is configured by water is likely to be slippery with the oil film having water repellency as an interface. Therefore, the packaging material film of the present invention can impart excellent slip-down property to the oil-in-water dispersion-type content by the heating treatment.

In the packaging material film of the first invention, an amount of the oil film to be formed is preferably 0.2 to 1.2 g/200 cm$^2$. When the amount of the oil film is within the above range, favorable slip-down property with respect to the content is easily maintained.

Another aspect of the present invention (second invention) for solving the above problems is a packaging material film including a first resin layer that contains a polyolefin resin and fillers, in which a ratio Y/X of a surface area ratio Y of a surface of the first resin layer with respect to an arithmetic mean height Sa X μm of the surface of the first resin layer is 0.4 to 8.0 μm$^{-1}$.

According to this packaging material film, the polyolefin resin in the first resin layer can absorb the oil content and swell under the temperature conditions of the retort treatment or the boiling treatment. Therefore, when the packaging material film is used as a packaging material for a package body in which an oil-in-water dispersion-type content is enclosed and the heating treatment such as a retort treatment or a boiling treatment is performed in a state where the oil-in-water dispersion-type content is brought into contact with the surface of the first resin layer of the packaging material film, some of the oil content in the content is absorbed by the first resin layer. At this time, in the first resin layer, since a ratio Y/X of a surface area ratio Y of a surface S of a first resin layer 21 with respect to an arithmetic mean height Sa X μm of the surface of the first resin layer is 0.4 to 8.0 μm$^{-1}$, the surface of the first resin layer on the side of the content can have appropriate irregularities due to the fillers, and a contact area between the first resin layer and the oil-in-water dispersion-type content becomes larger. Therefore, the oil content contained in the content is easily absorbed by the first resin layer, and the lipophilicity of the first resin layer is improved. This facilitates the stable formation of an oil film between the surface of the first resin layer and the content. Since the oil film is interposed between the surface of the first resin layer and the content, the content is prevented from being in direct contact with the surface of the first resin layer, and the content whose surface portion is configured by water is likely to be slippery with the oil film having water repellency as an interface. Therefore, the packaging material film of the present invention can impart excellent slip-down property to the oil-in-water dispersion-type content by the heating treatment.

In the packaging material film of the second invention, a projected area ratio of protrusions formed by the fillers on the surface of the first resin layer is preferably 8 to 45%. When the projected area ratio is within the above range, favorable slip-down property with respect to the content is easily maintained.

In the packaging material film, the fillers preferably include a porous filler. By using a porous filler, an oil film is easy to be more stably formed between the surface of the first resin layer and the content, and further excellent slip-down property with respect to the content is likely to be exhibited.

In the packaging material film, the first resin layer preferably further contains an elastomer component. Thereby, further excellent slip-down property with respect to the content is likely to be exhibited.

Furthermore, still another aspect of the present invention is a packaging material including a substrate and a packaging material film provided on the substrate, in which the packaging material film is composed of the aforementioned packaging material film, and a surface of the first resin layer of the packaging material film on a side opposite to the substrate is exposed.

This packaging material includes the above-described packaging material film, and the packaging material film is subjected to a heating treatment in a state where the oil-in-water dispersion-type content is brought into contact with the exposed surface on a side opposite to the substrate, so that excellent slip-down property can be imparted to the oil-in-water dispersion-type content. Furthermore, since this packaging material further includes a substrate, the packaging material film is reinforced by the substrate.

Still another aspect of the present invention is a packaging bag for containing an oil-in-water dispersion-type content, the packaging bag being formed using the aforementioned packaging material, the first resin layer being disposed on an inner side thereof.

According to this packaging bag, the packaging material film included in the packaging material is subjected to a heating treatment, so that excellent slip-down property can be imparted to the oil-in-water dispersion-type content that comes into contact with the first resin layer. Therefore, after the oil-in-water dispersion-type content is enclosed in the packaging bag to obtain a package body, when the package body is subjected to the heating treatment such as a retort treatment or a boiling treatment, the oil-in-water dispersion-type content can be easily slipped down at the time of discharging the oil-in-water dispersion-type content from the package body after the package body is opened. Thus, the residual liquid amount of the oil-in-water dispersion-type content can be reduced, waste of the content can be prevented, contamination due to adhesion of the content can be prevented, and a discharge operation of the content can be efficiently performed.

Still another aspect of the present invention is a package body including the aforementioned packaging bag and an oil-in-water dispersion-type content enclosed in the packaging bag.

According to this package body, the packaging material film included in the packaging material is subjected to a heating treatment, so that excellent slip-down property can be imparted to the oil-in-water dispersion-type content that comes into contact with the first resin layer. Therefore, when the package body is subjected to the heating treatment such as a retort treatment or a boiling treatment, the oil-in-water dispersion-type content can be easily slipped down at the time of discharging the oil-in-water dispersion-type content from the package body after the package body is opened. Thus, the residual liquid amount of the oil-in-water dispersion-type content can be reduced, waste of the content can be prevented, contamination due to adhesion of the content can be prevented, and a discharge operation of the content can be efficiently performed.

**Advantageous Effects of Invention**

According to the present invention, there are provided a packaging material film capable of imparting excellent slip-down property to an oil-in-water dispersion-type content by a heating treatment, and a packaging material, a packaging bag, and a package body that include the packaging material film.

**Brief Description of Drawings**

FIG. 1 is a cross-sectional view schematically illustrating an embodiment of a packaging material according to the present invention.
FIGS. 2(a) to 2(c) are a series of schematic diagrams describing a mechanism by which the packaging material according to the present invention can impart excellent slip-down property to an oil-in-water dispersion-type content.
FIG. 3 is a cross-sectional view illustrating an embodiment of a package body according to the present invention.
FIGS. 4(a) to 4(e) are a series of schematic diagrams describing a method for evaluating the slip-down property of a content of the packaging material.

**Description of Embodiments**

Hereinafter, embodiments of the present invention will be specifically described with reference to the drawings. Note that, in the drawings, the same or equivalent constituent elements are designated by the same reference signs, and redundant description will be omitted. Furthermore, the dimensional ratios in the drawings are not limited to ratios illustrated in the drawings.

<Packaging material>

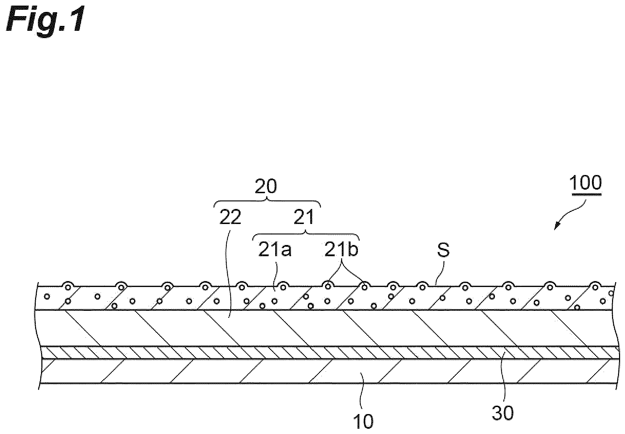

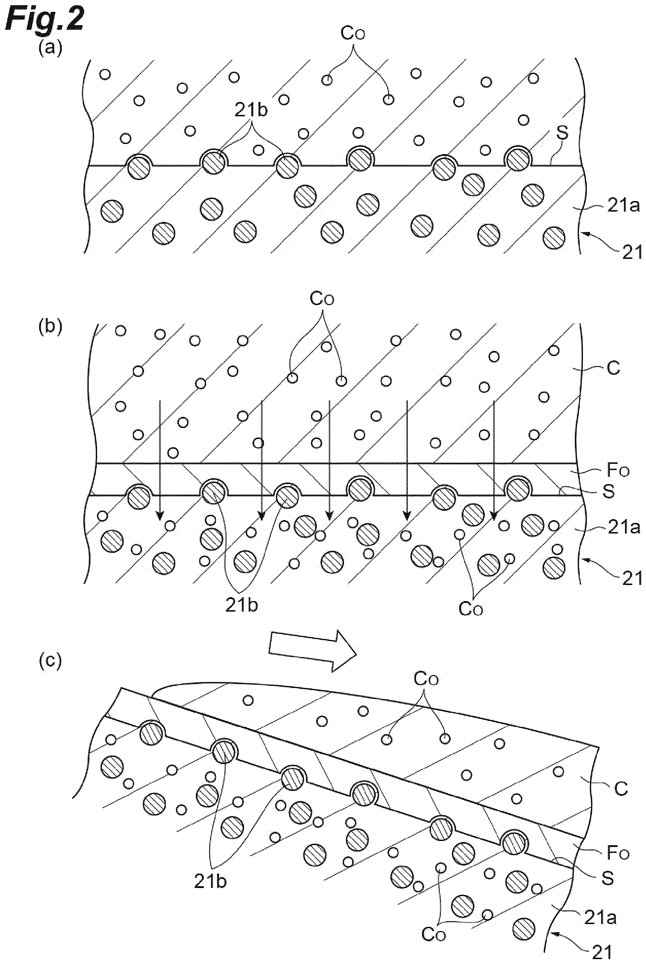

First, an embodiment of a packaging material of the present invention will be described with reference to FIG. 1 and FIG. 2. FIG. 1 is a cross-sectional view schematically illustrating an embodiment of a packaging material according to the present invention, and FIGS. 2(a) to 2(c) are a series of schematic diagrams describing a mechanism by which the packaging material according to the present invention can impart excellent slip-down property to an oil-in-water dispersion-type content.

A packaging material 100 illustrated in FIG. 1 is used to form a packaging bag for containing an oil-in-water dispersion-type content. The oil-in-water dispersion-type content is a content which contains water and an oil content and in which the contained amount of water is larger than the contained amount of the oil content. The amount of the oil content contained in the oil-in-water dispersion-type content is, for example, 0.1% by mass or more and less than 50% by mass, and may be 0.5 to 40% by mass or 1 to 20% by mass. Specific examples of the oil-in-water dispersion-type content include curry, a hashed beef (hayashi) sauce, a pasta sauce (for example, a meat sauce), and pet food. Note that, the amount of the oil content contained in curry is, for example, about 0.2 to 15% by mass, and the amount of water content contained in curry is, for example, about 70 to 90% by mass.

The packaging material 100 includes a substrate 10, a packaging material film 20 provided on the substrate 10, and an adhesive layer 30 attaching the substrate 10 and the packaging material film 20 to each other.

The packaging material film 20 includes a first resin layer 21 containing a polyolefin resin and fillers and a second resin layer 22, and in the packaging material film 20, the first resin layer 21 is disposed on a side opposite to the substrate 10 and the second resin layer 22 is disposed on the substrate 10 side. That is, a surface S of the first resin layer 21 on a side opposite to the substrate 10 is exposed. The surface S of this first resin layer 21 will be an inner surface of a packaging bag in a case where a packaging bag (for example, a retort pouch) is formed using the packaging material 100.

The first resin layer 21 contains a resin composition 21a containing a polyolefin resin and fillers 21b dispersed in the resin composition 21a. Protrusions are formed on the surface S of the first resin layer by the fillers 21b.

According to the packaging material 100, the polyolefin resin contained in the first resin layer 21 of the packaging material film 20 can absorb the oil content and swell under the temperature conditions of a retort treatment or a boiling treatment. Therefore, when the packaging material 100 is used as a package body in which an oil-in-water dispersion-type content C is enclosed, the oil-in-water dispersion-type content C is brought into contact with the surface S of the first resin layer 21 of the packaging material film 20 (see FIG. 2(a)), and the heating treatment such as a retort treatment or a boiling treatment is performed in this state, some of an oil content $C_O$ contained in the content C is absorbed by the first resin layer 21 (see FIG. 2(b)).

At this time, in a first embodiment, a water sliding angle at room temperature of an oil film $F_O$ on the surface S of the first resin layer 21 as measured by a measurement method described below is 20° or less. That is, this means that the surface of the first resin layer 21 on the side of the content C has appropriate irregularities due to the fillers 21b, the oil content $C_O$ contained in the content C is absorbed by the first resin layer 21, and thus the lipophilicity of the first resin layer 21 is improved.

By appropriately adjusting the degree of formation of the protrusions by the fillers 21b on the surface S of the first resin layer 21, the oil film $F_O$ is easy to be stably formed between the surface S of the first resin layer 21 and the content C. Further, since the oil film $F_O$ is interposed between the surface S of the first resin layer 21 and the content C, the water sliding angle can be set in a desired range, so that the content C is prevented from being in direct contact with the surface S of the first resin layer 21, and the content C whose surface portion is configured by water is likely to be slippery with the oil film $F_O$ having water repellency as an interface.

Furthermore, at this time, in a second embodiment, in the first resin layer 21, since a ratio Y/X of a surface area ratio Y of the surface S of the first resin layer 21 with respect to an arithmetic mean height Sa X $\mu$m of the surface S of the first resin layer 21 is 0.4 to 8.0 $\mu m^{-1}$, the surface S of the first resin layer 21 on the side of the content C can have appropriate irregularities due to the fillers 21b, and a contact area between the first resin layer 21 and the oil-in-water dispersion-type content C becomes larger. Therefore, the oil content $C_O$ contained in the content C is easily absorbed by the first resin layer 21, and the lipophilicity of the first resin layer 21 is improved. The inventors speculate that a large number of protruding structures of about several micrometers, which are produced by the fillers 21b, is important in the formation of the oil film Fo, and that this is a structure that cannot be obtained by a general processing method such as a shaping treatment.

Herein, Y/X is a three-dimensional parameter that expresses the efficiency with which the arithmetic mean height Sa contributes to the surface area ratio. The arithmetic mean height Sa is a parameter obtained by extending Ra (arithmetic mean height of lines) to a surface. The surface area ratio is a parameter that expresses the ratio of the actual surface area with respect to the area when a surface on which the surface shape is measured is assumed to be completely flat. In a case where the ratio Y/X of both the arithmetic mean height and the surface area ratio is within the above range, favorable slip-down property with respect to the content C can be attained. For example, even when the value of Sa is the same, it can be said that the larger the surface area ratio, the better the contribution efficiency to the slip-down property.

By appropriately adjusting the degree of roughness and surface area ratio of the surface S of the first resin layer 21, the oil film $F_O$ is easy to be stably formed between the surface S of the first resin layer 21 and the content C. Further, since the oil film $F_O$ is interposed between the surface S of the first resin layer 21 and the content C, the content C is prevented from being in direct contact with the surface S of the first resin layer 21, and the content C whose surface portion is configured by water is likely to be slippery with the oil film $F_O$ having water repellency as an interface.

Therefore, in the first and second embodiments, as illustrated in FIG. 2(c), the oil-in-water dispersion-type content C is likely to be slippery on the oil film $F_O$ by merely inclining the surface S of the packaging material 100. Therefore, the packaging material 100 can impart excellent slip-down property to an oil-in-water dispersion-type content C by a heating treatment.

Furthermore, since the polyolefin resin has thermal adhesiveness, the first resin layer 21 can also play a role of a sealant film. Therefore, when a package body is formed, the package body can be easily formed using the packaging material 100 by heat-sealing the first resin layers 21 to each other with the first resin layers 21 facing inward.

Hereinafter, the first resin layer 21, the second resin layer 22, the substrate 10, and the adhesive layer 30 that constitute the packaging material 100 will be described.

(First resin layer)

The first resin layer 21 is a layer that imparts excellent slip-down property to the oil-in-water dispersion-type content C by subjecting the first resin layer to a heating treatment (for example, a retort treatment and a boiling treatment) in a state of being in contact with the oil-in-water dispersion-type content C.

The content percentage of the polyolefin resin in the resin composition 21a is usually 75% by mass or more, and may be 80% by mass or more or 90% by mass or more. The resin composition 21a may be substantially composed of a polyolefin resin.

Examples of the polyolefin resin include a polypropylene resin, a polyethylene resin, and a polybutylene resin. Among them, from the viewpoint of excellent heat resistance, a polypropylene resin is preferable.

Examples of the polyethylene resin include low-density polyethylene, linear low-density polyethylene, medium-density polyethylene, high-density polyethylene, and an ethylene-$\alpha$-olefin copolymer.

Examples of the polypropylene resin include a homopolypropylene, a block polypropylene, a random polypropylene, a propylene-$\alpha$-olefin copolymer, and a modified polypropylene. In the case of using a combination of a block polypropylene and a random polypropylene as the polypropylene resin, the mass ratio of the block polypropylene and the random polypropylene (block polypropylene/random polypropylene) is preferably 20/80 to 80/20 and further preferably 40/60 to 60/40. Examples of the random polypropylene include Prime Polypro F744NP and F-300SP manufactured by Prime Polymer Co., Ltd. Examples of the block polypropylene include NOVATEC BC3HF and BCSFA manufactured by Japan Polypropylene Corporation.

Other than the above, the polyolefin resin may be a cyclic polyolefin such as polynorbornene. Furthermore, as the polyolefin resin, from the viewpoint of sealability and strength properties (such as tensile strength and impact strength), a linear polyolefin is preferable, and the linear polyolefin may be straight-chain or branched.

Examples of an $\alpha$ olefin component in the ethylene-$\alpha$-olefin copolymer and propylene-$\alpha$-olefin copolymer include ethylene, 1-butene, 1-pentene, 1-hexene, 1-heptene, 1-octene, and 4-methyl-1-pentene. The copolymer may be a random copolymer or a block copolymer.

The modified polypropylene is obtained, for example, by graft modification of a polypropylene with an unsaturated carboxylic acid derivative component derived from unsaturated carboxylic acid, an acid anhydride of unsaturated carboxylic acid, an ester of unsaturated carboxylic acid, or the like. Furthermore, as the polypropylene resin, modified polypropylenes such as a hydroxyl group-modified polypropylene and acrylic-modified polypropylene can also be used. As an $\alpha$ olefin component that is used for obtaining a propylene-based copolymer, 1-butene, 1-pentene, 1-hexene, 1-heptene, 1-octene, 4-methyl-1-pentene, and the like can be exemplified.

Examples of the filler 21b include organic fillers such as an olefin filler and an acrylic filler, inorganic fillers such as a silica filler, and a porous filler.

Examples of the olefin filler include MIPELON (registered trademark) series manufactured by Mitsui Chemicals, Inc. and CS series manufactured by SUMITOMO CHEMICAL COMPANY, LIMITED.

Examples of acrylic filler include the MX series manufactured by Soken Chemical & Engineering Co., Ltd. and Uni-Powder NMB series manufactured by ENEOS LC COMPANY, LIMITED.

Examples of the silica filler include SMOOTH MASTER series manufactured by Dainichiseika Color & Chemicals Mfg. Co., Ltd., SYLOPHOBIC series manufactured by FUJI SILYSIA CHEMICAL LTD., ADMAFINE SO series manufactured by ADMATECHS COMPANY LIMITED, Silica TMS series manufactured by TAYCA CORPORATION, and SUNSPHERE series manufactured by AGC Si-Tech Co., Ltd.

Examples of the porous filler composed of an organic substance include TECHPOLYMER MBP series manufactured by Sekisui Kasei Co., Ltd., and TECHPOLYMER ACP series manufactured by Sekisui Kasei Co., Ltd.

Examples of the porous filler composed of an inorganic substance include SYLOPHOBIC series manufactured by FUJI SILYSIA CHEMICAL LTD., and SUNSPHERE series manufactured by AGC Si-Tech Co., Ltd.

One kind of the filler may be used singly, or two or more kinds thereof having different compositions, particle diameters, and the like may be used in combination.

In a case where the porous filler is contained in an appropriate content percentage in the first resin layer 21, this porous filler can adsorb the oil content $C_O$, and absorption of the oil content $C_O$ contained in the oil-in-water dispersion-type content C into the first resin layer 21 is promoted. In this case, the oil film $F_O$ is easy to be more stably formed between the surface S of the first resin layer 21 and the content C by the synergistic effect between irregularities on the surface S of the first resin layer 21 and improvement in lipophilicity attributable to oil absorption. Therefore, further excellent slip-down property with respect to the content C is likely to be exhibited.

The porous filler can include a main body portion. The main body portion included in the porous filler may be an inorganic substance or an organic substance. Examples of the organic substance include a polyolefin resin and an acrylic resin. Examples of the acrylic resin include crosslinked poly(meth)acrylic acid esters such as crosslinked polymethyl methacrylate. These can be used singly or in combination with two or more kinds thereof. Examples of the inorganic substance include mineral fillers such as silica, talc, ceramics, glass beads, and calcium carbonate, carbon black, glass fibers, ceramic fibers, and carbon fibers. These can also be used singly or in combination with two or more kinds thereof.

The porous filler may further include a covering portion covering at least a part of the main body portion. The covering portion may be configured by a hydrophilic material or a hydrophobic material, and is preferably configured by a hydrophobic material. Herein, the hydrophobic material refers to a material having a DBA (di-n-butylamine) value of 200 mEq/kg or less, and the DBA value refers to an amount of DBA adsorbed to the surface of the main body portion. The DBA value corresponds to the amount of DBA adsorbed to the hydroxyl group on the surface of the main body portion, and the smaller the DBA value, the less the hydroxyl group (higher hydrophobicity).

The porous filler configured by the main body portion and the covering portion can be obtained, for example, by chemically reacting the main body portion with a raw material of the hydrophobic material, that is, by hydrophobizing the main body portion. Examples of the raw material of the hydrophobic material include an organosilicon compound. Among them, the raw material of the hydrophobic material is preferably an organosilicon compound.

The average particle diameter of the fillers 21b is determined according to the type of the fillers by the following method.

(Calculation method by laser diffraction type particle size distribution measurement)

(1) The fillers 21b are dispersed in a dispersion medium. The dispersion medium is, for example, water or an organic solvent and is appropriately selected according to the type of the fillers.
(2) The average particle diameter of the fillers 21b is calculated using a laser diffraction type particle size distribution measuring apparatus (product name: "MT3300EX II", manufactured by MicrotracBEL Corp.) by a laser diffraction scattering method.

(Calculation method by microscope observation)

In a case where the laser diffraction type particle size distribution measurement is not suitable or is difficult, the average particle diameter of the fillers 21b may be determined using an optical microscope such as a scanning electron microscope (SEM) or a laser microscope.

Regarding any particles in the field of view observed by microscope observation, lengths of the maximum diameter and the minimum diameter of the particles are measured and a value obtained by dividing the sum of the lengths by 2 is regarded as the particle diameter. The particle diameters of a plurality of particles are measured and calculated, and an average value thereof is regarded as the average particle diameter. The number of any particles described above is preferably 10 or more.

The average particle diameter of the fillers 21b is preferably 3 $\mu$m or more. In this case, since appropriate irregularities (arithmetic mean height Sa) can be provided by adding an appropriate amount of the fillers 21b, the slip-down property of the content C can be efficiently improved while reducing the influence on physical properties of the packaging material film 20 such as seal strength reduction.

The average particle diameter of the fillers 21b is more preferably 5 $\mu$m or more and particularly preferably 7 $\mu$m or more.

The average particle diameter of the fillers 21b is preferably 30 $\mu$m or less. In this case, as compared with a case where the average particle diameter of the fillers 21b exceeds 30 $\mu$m, the oil film $F_O$ is more easily formed on the surface of the first resin layer 21, and the packaging material film 20 can impart more excellent slip-down property to the oil-in-water dispersion-type content C enclosed in the package body.

The average particle diameter of the fillers 21b is more preferably 20 $\mu$m or less and further preferably 15 $\mu$m or less.

The content percentage of the fillers 21b in the first resin layer 21 is preferably 0.5 to 30% by mass. In this case, as compared with a case where the content percentage of the fillers 21b is out of the above range, the packaging material film 20 is easy to impart more excellent slip-down property to the oil-in-water dispersion-type content C enclosed in the package body. The content percentage of the fillers 21b in the first resin layer 21 is preferably 1 to 15% by mass and more preferably 3 to 10% by mass. The contained amount of the fillers 21b in the first resin layer 21 is, for example, 0.5 to 10 parts by mass, preferably 1 to 8 parts by mass, and more preferably 2 to 8 parts by mass, with respect to 100 parts by mass of the polyolefin resin. When the contained amount of the fillers 21b is within the above range, appropriate irregularities can be provided to the surface S of the first resin layer 21.

The thickness of the first resin layer 21 refers to a value determined as follows.

(1) First, the packaging material film 20 is fixed to an embedding resin (acrylic resin) to prepare a structure.
(2) A sample for cross-section observation is cut off from the structure by a microtome.
(3) The cross-section of the cut sample for cross-section observation is observed by a microscope (product name: VHX-1000, manufactured by KEYENCE CORPORATION).
(4) The thicknesses in three places in which the fillers 21b do not exist are measured along the thickness direction of the first resin layer 21, and an average value of these thicknesses in three places is calculated as the thickness of the first resin layer 21.

The thickness of the first resin layer 21 is, for example, 2 to 100 $\mu$m, preferably 4 to 70 $\mu$m, more preferably 6 to 50 $\mu$m, and further preferably 8 to 30 $\mu$m. When the thickness of the first resin layer 21 is within the above range, both of the slip-down property of the content C and the heat-sealability can be achieved in a high level. Herein, the heat-sealability refers to, for example, a property that enables heat sealing under conditions of 100°C to 200°C and 0.1 to 0.3 MPa for 1 to 3 seconds.

In the first embodiment, the water sliding angle at room temperature of the oil film $F_O$ on the surface S of the first resin layer 21 as measured by the following measurement method described below is 20° or less. That is, this means that the surface S of the first resin layer 21 on the side of the content C has appropriate irregularities due to the fillers 21b, the oil content $C_O$ contained in the content C is absorbed by the first resin layer 21, and thus the lipophilicity of the first resin layer 21 is improved. The water sliding angle is preferably 15° or less and more preferably 10° or less. The lower limit of the water sliding angle is not particularly limited, and can be preferably set to 5°. The water sliding angle can be changed by appropriately adjusting the degree of formation of protrusions by the fillers 21b on the surface S of the first resin layer 21 from the viewpoint of the amount and particle diameter of the fillers 21b.

(Measurement method)

a) A packaging bag, which is formed by using a packaging material including a substrate and the packaging material film provided on the substrate such that the first resin layer is disposed on an inner side thereof, is prepared.
b) A package body including the packaging bag and an oil-in-water dispersion-type content enclosed in the packaging bag is prepared.
c) The package body is subjected to a retort treatment and a boiling treatment. The retort treatment described herein is a heating treatment under the conditions of pressure: 0.2 MPa, temperature: 121°C, and treatment time: 30 minutes, and the boiling treatment is a heating treatment under the conditions of pressure: normal pressure, temperature: 100°C, and treatment time: 5 minutes.
d) A water sliding angle at room temperature on an oil film formed on a surface of the first resin layer is measured using a contact angle meter (measuring apparatus: manufactured by KRUSS GmbH, simple contact angle meter DSA25) under the conditions of a liquid amount of 20 $\mu$L and a speed of 90°/min. The room temperature described herein is 25°C.

In the first embodiment, the amount of the oil film $F_O$ formed on the surface S of the first resin layer 21 is preferably 0.2 to 1.2 g/200 cm$^2$. When the amount of the oil film is within the above range, favorable slip-down property with respect to the content is easily maintained. In a case where the amount of the oil film $F_O$ exceeds the upper limit value, since an amount of the oil film is formed that exceeds the amount needed to promote slip-down property, an excess oil film remains in the packaging bag, and the discharged amount of the content is likely to decrease. When the amount of the oil film $F_O$ is less than the lower limit value, the oil film retaining and stabilizing action by the protrusions is likely to be insufficient, and the slip-down property with respect to the content C is likely to decrease. The amount of the oil film $F_O$ is more preferably 0.4 g/200 cm$^2$ or more and further preferably 0.6 g/200 cm$^2$ or more. The amount of the oil film $F_O$ is more preferably 1.0 g/200 cm$^2$ or less and further preferably 0.8 g/200 cm$^2$ or less. The amount of the oil film $F_O$ is calculated from the weights of a sample before and after wiping off the oil film formed by the measurement method with isopropyl alcohol (IPA).

In the second embodiment, the arithmetic mean height Sa of the surface S of the first resin layer 21 may be appropriately adjusted in a range where the above ratio Y/X is 0.4 to 8.0 $\mu$m$^{-1}$, and is preferably 2.0 $\mu$m or less. This facilitates the formation of appropriate irregularities on the surface S of the first resin layer 21, and more excellent slip-down property can be imparted to the oil-in-water dispersion-type content C. The arithmetic mean height Sa of the surface S is more preferably 1.5 μm or less and further preferably 1 μm or less.

The arithmetic mean height Sa of the surface S is preferably 0.1 μm or more, more preferably 0.3 μm or more, and further preferably 0.5 μm or more.

The surface area ratio of the surface S of the first resin layer 21 may be appropriately adjusted in a range where the above ratio Y/X is 0.4 to 8.0 μm$^{-1}$, and is preferably more than 1.00. This facilitates the formation of appropriate irregularities on the surface S of the first resin layer 21, and more excellent slip-down property can be imparted to the oil-in-water dispersion-type content C. The surface area ratio of the surface S is more preferably 1.01 or more and further preferably 1.02 or more.

The surface area ratio of the surface S is preferably 1.10 or less, more preferably 1.09 or less, and further preferably 1.08 or less.

The arithmetic mean height Sa and the surface area ratio of the surface S can be adjusted, for example, by the blending amount and the average particle diameter of the fillers 21b, and the film formation conditions (such as a thickness and a temperature) of the first resin layer 21. Note that, values of the "arithmetic mean height Sa" and the "surface area ratio" described herein mean values measured using a laser microscope (trade name "OLS-4000", manufactured by Olympus Corporation) under the following condition.

· Magnification of objective lens: 50 times
· Tilt correction: straight line correction
· Smoothing correction: median once
· Cutoff: λc = 80 μm

A ratio Y/X of a surface area ratio Y of the surface S of the first resin layer 21 with respect to an arithmetic mean height Sa X μm of the surface S of the first resin layer 21 is 0.4 to 8.0 μm$^{-1}$. When the ratio Y/X is within the above range, appropriate irregularities are formed on the surface S of the first resin layer 21. In a case where the ratio Y/X is less than the lower limit value, Sa tends to be excessively large, which may prevent the content C from sliding down. In a case where the ratio Y/X exceeds the upper limit value, since Sa is small and contributes little to an increase in surface area ratio, it is difficult to obtain an effect of retaining and stabilizing an oil film to be formed. The ratio Y/X is preferably 0.7 μm$^{-1}$ or more, more preferably 1.0 μm$^{-1}$ or more, and further preferably 1.2 μm$^{-1}$ or more. The ratio Y/X is preferably 7.0 μm$^{-1}$ or less, more preferably 5.0 μm$^{-1}$ or less, and further preferably 4.0 μm$^{-1}$ or less.

In the second embodiment, a projected area ratio of protrusions formed by the fillers 21b on the surface S of the first resin layer 21 is preferably 8 to 45%. The projected area ratio is a two-dimensional parameter in which the number of the fillers 21b contributing to the formation of protrusions on the surface S of the first resin layer 21, the size thereof, the degree of projection on the surface S, and the like are reflected. For example, the projected area of one filler 21b depends on the particle diameter of the filler 21b and the degree of projection on the surface S, and even when the protrusions are formed by the fillers 21b having the same particle diameter, the projected area are changed by the degree of projection. The projected area ratio is calculated by the following formula when a flat portion of the surface S is designated as "area I" and the protrusion is designated as "area II". Note that, the area I and the area II are determined by binarizing an image observed with a microscope with a threshold value based on luminance.

$$\text{Projected area ratio} = \text{Area II}/(\text{Area I} + \text{Area II}) \times 100 \ [\%]$$

When the projected area ratio exceeds the upper limit value, the protrusions are excessively large, and the slip-down property with respect to the content C is likely to decrease. When the projected area ratio is less than the lower limit value, the oil film retaining and stabilizing action by the protrusions is likely to be insufficient, and the slip-down property with respect to the content C is likely to decrease. The projected area ratio is preferably 10% or more, more preferably 12% or more, and further preferably 15% or more. The projected area ratio is preferably 42% or less, more preferably 40% or less, and further preferably 38% or less.

The first resin layer 21 may further contain an elastomer component from the viewpoint of exhibiting further excellent slip-down property. Examples of the elastomer component include a block copolymer of polypropylene and polyethylene, a block copolymer of polyethylene and ethylene-butylene, a block copolymer of polyethylene and ethylene-octene, an ethylene-based elastomer, a propylene-based elastomer, a butene-based elastomer, and a reactor TPO. The reactor TPO (reactor thermoplastic polyolefin) is one kind of olefin-based thermoplastic elastomers (TPO) and is, for example, configured by a polypropylene as a base resin and a rubber component finely dispersed therein by adding a high-concentration rubber component during polymerization. Examples of the ethylene-based elastomer and the propylene-based elastomer include TAFMER series manufactured by Mitsui Chemicals, Inc. One kind of the elastomer component may be used singly, or two or more kinds thereof may be used in combination.

The added amount of the elastomer component (the total amount in a case where a plurality of elastomer components are added) is, for example, 30 parts by mass or less, preferably 1 to 25 parts by mass, more preferably 2 to 20 parts by mass, and further preferably 3 to 15 parts by mass, with respect to 100 parts by mass of the polyolefin resin. The amorphous part (rubber component) contained in the elastomer component has a property of absorbing oil. Therefore, the elastomer component promotes stable and uniform formation of the oil film $F_O$, and thereby the slip-down property with respect to the content C is even more improved.

(Second resin layer)

The second resin layer 22 is a layer provided between the first resin layer 21 and the substrate 10. When the packaging material 100 further includes the second resin layer 22, the functions (such as heat-sealability, heat resistance, impact resistance, and oxygen/water vapor barrier properties) of the second resin layer 22 can impart to the packaging material 100. For example, from the viewpoint of improving heat-sealability, the second resin layer 22 preferably contains a thermoplastic resin. Specific examples of the thermoplastic resin include a polyolefin resin, an ethylene-$\alpha,\beta$ unsaturated carboxylic acid copolymer or an esterified product or ion-crosslinked product thereof, an ethylene-vinyl acetate copolymer or a saponified product thereof, polyvinyl acetate or a saponified product thereof, a polycarbonate resin, a thermoplastic polyester resin, an ABS resin, a polyacetal resin, a polyamide resin, a polyphenylene oxide resin, a polyimide resin, a polyurethane resin, a polylactic resin, a furan resin, and a silicone resin. These thermoplastic resins can be used singly or in combination of two or more types thereof.

The thickness of the second resin layer 22 can be appropriately set according to applications of the packaging material 100. The thickness of the second resin layer 22 is, for example, 1 to 300 $\mu$m, preferably 2 to 200 $\mu$m, more preferably 5 to 150 $\mu$m, and further preferably 10 to 100 $\mu$m.

(Substrate)

The substrate 10 serves as a support and is not particularly limited as long as it has durability with respect to the heating treatment such as a retort treatment or a boiling treatment, and examples thereof include a resin film and a metal foil. Examples of the resin film include films containing at least one kind of polyolefins (such as polyethylene (PE) and polypropylene (PP)), acid-modified polyolefins, polyesters (such as polyethylene terephthalate (PET)), polyamide (PA), polyvinyl chloride (PVC), acetylcellulose, and a cellophane resin. This film may be a stretched film or may be an unstretched film. Examples of the metal foil include an aluminum foil and a nickel foil. The substrate 10 may be obtained by laminating a plurality of substrates each made of a different material, or may include a coating layer or a metal deposition layer.

The thickness of the substrate 10 can be appropriately set according to applications of the packaging material 100. The thickness of the substrate 10 is, for example, 1 to 500 $\mu$m and may be 10 to 100 $\mu$m.

(Adhesive layer)

The adhesive layer 30 attaches the packaging material film 20 (a laminate of the first resin layer 21 and the second resin layer 22) and the substrate 10 to each other. The adhesive constituting the adhesive layer 30 is not particularly limited as long as it can attach the packaging material film 20 and the substrate 10 to each other, and examples of such an adhesive include polyurethane resins obtained by causing a bifunctional or higher isocyanate compound to act on main agents such as polyester polyol, polyether polyol, acrylic polyol, and carbonate polyol, and the like. Various polyols may be used singly or in combination of two or more kinds thereof.

In the adhesive layer 30, a carbodiimide compound, an oxazoline compound, an epoxy compound, a phosphorus compound, a silane coupling agent, or the like may be blended with the polyurethane resin described above, for the purpose of adhesion promotion. Other various additives or stabilizing agents may be blended with the polyurethane resin described above according to the performance required in the adhesive layer 30.

The thickness of the adhesive layer 30 is, for example, 1 to 10 $\mu$m and may be 3 to 7 $\mu$m, from the viewpoint of obtaining desired adhesion strength, followability, processability, and the like.

An adhesive primer (anchor coat) can also be provided on the substrate 10, and as a material therefor, a polyester-based resin, a polyurethane-based resin, a polyallylamine-based resin, a polyethylenimine-based resin, a polybutadiene-based resin, an ethylene-vinyl acetate copolymer, and the like can be used. Various curing agents or additives that can be used as an adhesive may be blended, as necessary, in the adhesive primer.

<Method for manufacturing packaging material>

Next, a method for manufacturing the aforementioned packaging material will be described.

The packaging material 100 can be obtained by pasting the packaging material film 20 and the substrate 10 together. Examples of a method of pasting the substrate 10 and the packaging material film 20 together include a lamination method with an adhesive and a lamination method by a thermal treatment.

As the lamination method with an adhesive, various known lamination methods such as a dry lamination method, a wet lamination method, and a non-solvent lamination method can be used.

Examples of the lamination method by a thermal treatment roughly include the following methods (1) to (4):

(1) a method in which an adhesive resin is extruded between the packaging material film 20, which has been produced in advance, and the substrate 10 and laminated;
(2) a method in which the packaging material film 20 and an adhesive resin are extruded together and the adhesive resin faces the substrate 10 side and is laminated on the substrate 10;
(3) a method in which the laminate obtained by the method (1) or (2) is pressurized while being further heated by a thermal roll so as to be attached; and
(4) a method in which the laminate obtained by the method (1) or (2) is further stored under a high-temperature atmosphere or allowed to pass through a drying and baking furnace under a high-temperature atmosphere.

<Package body>

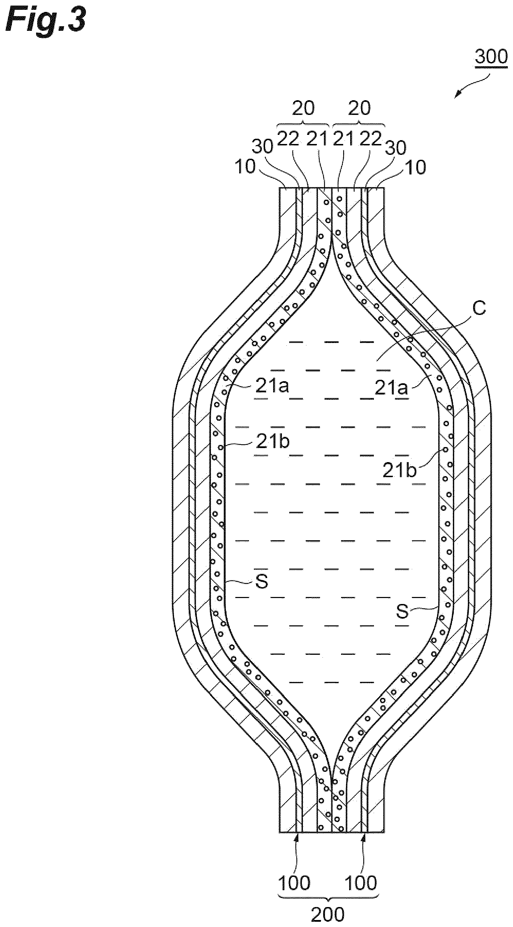

Next, an embodiment of the package body of the present invention will be described with reference to FIG. 3. FIG. 3 is a cross-sectional view illustrating an embodiment of a package body of the present invention.

As illustrated in FIG. 3, a package body 300 includes a packaging bag 200 and an oil-in-water dispersion-type content C enclosed in the packaging bag 200. In the package body 300, the first resin layer 21 of the packaging material film 20 of the packaging bag 200 is disposed on an inner side thereof and is in contact with the oil-in-water dispersion-type content C.

According to the package body 300, the packaging material film 20 included in the packaging material 100 forming the packaging bag 200 is subjected to a heating treatment, so that excellent slip-down property can be imparted to the oil-in-water dispersion-type content C that comes into contact with the first resin layer 21. Therefore, when the package body 300 is subjected to the heating treatment such as a retort treatment or a boiling treatment, the oil-in-water dispersion-type content C can be easily slipped down at the time of discharging the oil-in-water dispersion-type content C from the package body 300 after the package body 300 is opened. Thus, the residual liquid amount of the oil-in-water dispersion-type content C can be reduced, waste of the content C can be prevented, contamination due to adhesion of the content C can be prevented, and a discharge operation of the content C can be efficiently performed.

The package body 300 can be obtained by forming the packaging bag 200 using the packaging material 100 and enclosing the oil-in-water dispersion-type content C in the packaging bag 200.

Hereinbefore, the embodiments of the present invention have been specifically described; however, the present invention is not limited to the above-described embodiments. For example, in the above-described embodiment, the packaging material film 20 is configured by the first resin layer 21 and the second resin layer 22, but the packaging material film 20 may be configured only by the first resin layer 21.

Furthermore, the packaging material 100 includes the adhesive layer 30 attaching the packaging material film 20 and the substrate 10 to each other, but the adhesive layer 30 can be omitted as long as the packaging material film 20 and the substrate 10 can be directly fused.

**Examples**

Hereinafter, the present invention will be described in more detail on the basis of Examples and Comparative Examples; however, the present invention is not limited to the following Examples.

Materials used in each Experimental Example are as follows.

<Polyolefin resin>

(A1) Random polypropylene resin (propylene-ethylene random copolymer, trade name "Prime Polypro F744NP", manufactured by Prime Polymer Co., Ltd.)
(A2) Block polypropylene resin (propylene-ethylene block copolymer, trade name "NOVATEC BC5FA", manufactured by Japan Polypropylene Corporation)
(A3) Block polypropylene resin (propylene-ethylene block copolymer, trade name "NOVATEC BC3HF", manufactured by Japan Polypropylene Corporation)

<Filler>

(B1) Acrylic filler (average particle diameter: 3 $\mu$m, trade name "Uni-Powder NMB-0320C", manufactured by ENEOS LC COMPANY, LIMITED)
(B2) Acrylic filler (average particle diameter: 5 $\mu$m, trade name "Uni-Powder NMB-0520", manufactured by ENEOS LC COMPANY, LIMITED)
(B3) Acrylic filler (average particle diameter: 10 $\mu$m, trade name "Uni-Powder NMB-1020", manufactured by ENEOS LC COMPANY, LIMITED)
(B4) Polyethylene filler (average particle diameter: 10 $\mu$m, trade name "MIPELON PMPC-1010", manufactured by Mitsui Chemicals, Inc.)
(B5) Silica filler (average particle diameter: 10 $\mu$m, trade name "TMS-10", manufactured by TAYCA CORPORATION)
(B6) Silica filler (average particle diameter: 5 $\mu$m, trade name "TMS-05DCA", manufactured by TAYCA CORPORATION)
(B7) Silica filler (average particle diameter: 4 $\mu$m, trade name "SUNSPHERE NP30", manufactured by AGC Si-Tech Co., Ltd.)
(B8) Silica filler (average particle diameter: 10 $\mu$m, trade name "SUNSPHERE NP100", manufactured by AGC Si-Tech Co., Ltd.)
(B9) Porous silica filler (average particle diameter: 7 $\mu$m, trade name "SUNSPHERE L-71-N", manufactured by AGC Si-Tech Co., Ltd.)
(B10) Porous silica filler (average particle diameter: 12 $\mu$m, trade name "SUNSPHERE H-121-N", manufactured by AGC Si-Tech Co., Ltd.)
(B11) Silica filler (average particle diameter: 2 $\mu$m, trade name "FMB-1650B", manufactured by Japan Polypropylene Corporation)
(B12) Polyethylene filler (average particle diameter: 30 $\mu$m, trade name "MIPELON XM-220UC", manufactured by Mitsui Chemicals, Inc.)

<Elastomer component>

(C1) Polypropylene-polyethylene block copolymer
(C2) Propylene-based elastomer (trade name "TAFMER PN3560", manufactured by Mitsui Chemicals, Inc.)
(C3) Polyethylene-based elastomer (trade name "TAFMER A4085S", manufactured by Mitsui Chemicals, Inc.)

<Production of packaging material>

A packaging material film (sealant film) of a two-layer configuration including the first resin layer having a composition each shown in Tables 1 to 4 and the second resin layer composed of the block polypropylene resin (A3) was produced using a co-extruder. At this time, the mixing ratio of the random polypropylene resin (A1) and the block polypropylene resin (A2) in the first resin layer was set to 50/50 at a mass ratio. Table 1 and Table 2 relate to the first invention, and Table 3 and Table 4 relate to the second invention.
In Table 2, in Experimental Example 29, the surface properties of the first resin layer were adjusted by mirror finishing (smoothing treatment), and in Experimental Example 30, the surface properties of the first resin layer were adjusted by a shaping treatment. In Table 4, in Experimental Example 29, the surface properties of the first resin layer were adjusted by mirror finishing (smoothing treatment), and in Experimental Examples 30 and 31, the surface properties of the first resin layer were adjusted by a shaping treatment.
Next, the obtained packaging material film and a PET film (trade name "ENMLET", manufactured by UNITIKA LTD.) having a thickness of 38 $\mu$m as a substrate were dry-laminated using a polyurethane-based adhesive (manufactured by Mitsui Chemicals, Inc.) and were aged at 50°C for 5 days to obtain a packaging material. Note that, in respective examples, the first resin layer and the second resin layer were formed so that the total thickness of the first resin layer and the second resin layer was 60 $\mu$m.

<Measurement of arithmetic mean height Sa>

The arithmetic mean height Sa and the surface area ratio of the first resin layer was measured for the packaging material in each example by using a laser microscope (trade name "OLS-4000", manufactured by Olympus Corporation) under the following condition. Results are shown in Table 3 and Table 4.

· Magnification of objective lens: 50 times
· Tilt correction: straight line correction
· Smoothing correction: median once
· Cutoff: $\lambda c$ = 80 $\mu$m

<Measurement of projected area ratio>

The projected area ratio of the first resin layer of the packaging material of each example was measured using a digital microscope (trade name "VHX-1000", manufactured by KEYENCE CORPORATION) according to the following procedures. Results are shown in Table 3 and Table 4.

(Procedures)

a) An image of the surface of the first resin layer is captured at a magnification of 500 times.
b) Luminance extraction is performed, and a minimum value at which the normal distribution of the flat portion and the normal distribution of the protrusion intersect is adjusted as a threshold value.
c) In a case where a bright luminance area is the flat portion and a dark luminance area is the protrusion, the image is binarized such that an area having the threshold value or more is taken as white and an area having the threshold value or less is taken as black.
d) In a case where the filler apex of the protrusion is recognized as bright luminance (white) due to halation or the like, correction is performed by comparison with the actual image of a) so that the filler apex is recognized as black.
e) The area of the flat portion is taken as the area I (white), the area of the protrusion is taken as the area II (black), and the area ratio of the area II is calculated based on the following formula. This area ratio is regarded as the projected area ratio of the protrusion.

$$\text{Projected area ratio} = \text{Area II}/(\text{Area I} + \text{Area II}) \times 100 \ [\%]$$

<Slip-down property evaluation of content>

(Residual liquid evaluation after retort treatment)

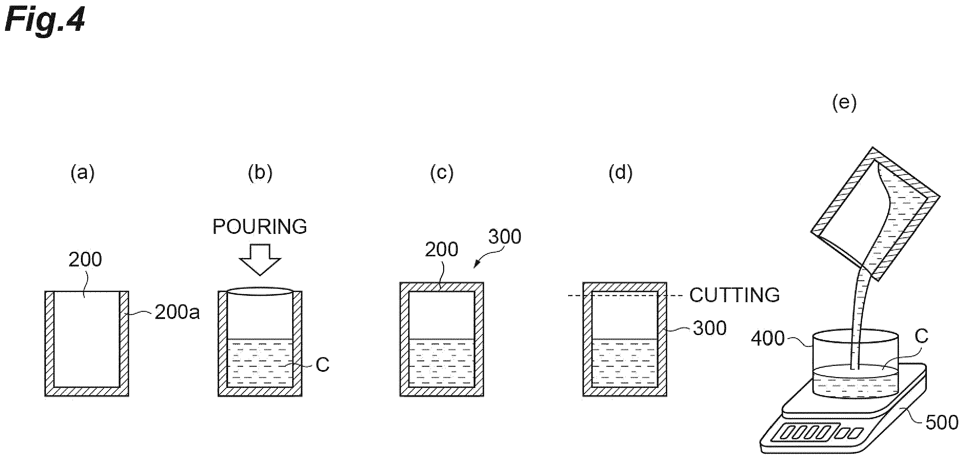

The slip-down property of the content after the retort treatment of the packaging material obtained in each example was evaluated by the method illustrated in FIGS. 4(a) to 4(e).
First, two packaging materials obtained by cutting the packaging material into a size of 150 mm in length $\times$ 138 mm in width were prepared. Then, the two packaging materials were superimposed such that the respective first resin layers face inward, and three sides were sealed using a heat sealer. In this way, as illustrated in FIG. 4(a), the packaging bag 200 configured by a pouch in which a sealed portion 200a was formed on three sides and one side was opened was produced. At this time, the three sides were heat-sealed under conditions of 190°C and 0.03 MPa for 2 seconds, and the width of the sealed portion 200a was set to 10 mm.
Next, as illustrated in FIG. 4(b), 180 g of curry (trade name "Bon Curry Gold Mild", lipid amount 7.0 g/180 g, manufactured by Otsuka Foods Co., Ltd.) as the content C was poured from the opening portion of the packaging bag 200.
Thereafter, the opening portion (the remaining side) was sealed using a heat sealer to form a sealed portion 200b on the remaining side as illustrated in FIG. 4(c). In this way, the package body 300 in which four sides were sealed and the content C was enclosed was produced. At this time, the opening portion was heat-sealed under conditions of 190°C and 0.03 MPa for 2 seconds, and the width of the sealed portion was set to 10 mm.
The package body 300 thus produced was put in a high-temperature, high-pressure cooking and sterilizing device (manufactured by Hitachi Capital Corporation) and subjected to a retort treatment with a high-temperature water vapor. The retort treatment was performed under the following conditions.

· Pressure: 0.2 MPa
· Temperature: 121°C
· Treatment time: 30 minutes

After the retort treatment, the package body 300 was subjected to a heat treatment in a hot water (boiling treatment) at 100°C over 5 minutes. Thereafter, as illustrated in FIG. 4(d), the upper part of the package body 300 was cut to form a pour spout. Next, as illustrated in FIG. 4(e), a state where the pouch was inverted and the pour spout was inclined at 45° from the horizontal plane was maintained for 10 seconds, the content C was discharged in a container 400, and the discharge amount was weighed by a scale 500. Then, the residual liquid ratio (%) was determined from the weighed discharged amount by the following formula.

$$\text{Residual liquid ratio (\%)} = \{(180 - \text{Discharged amount})/180\} \times 100$$

The same measurement was performed three times while changing the package body 300, and the average value of the residual liquid ratios for three measurements was calculated as an average residual liquid ratio. Furthermore, based on the average residual liquid ratio, the slip-down property of the content was evaluated according to the following evaluation criteria. The average residual liquid ratio and the evaluation results of the slip-down property of the content are shown in Tables 1 to 4.

A: The average residual liquid ratio is less than 6.5%.
B: The average residual liquid ratio is 6.5% or more and less than 8.0%.
C: The average residual liquid ratio is 8.0% or more and less than 10.0%.
D: The average residual liquid ratio is 10.0% or more.

(Appearance evaluation after retort treatment)

When the residual liquid ratio was measured as described above, the discharge behavior of the content C when the content (curry) C was discharged from the inside of the pouch was visually observed, and the appearance was also evaluated according to the following evaluation criteria. Results are shown in Tables 1 to 4.

A: It is observed that the content slips down cleanly, and there is almost no adhesion of the content to the packaging material film.
B: It is observed that the content slips down, and the amount of the content adhering to the packaging material film is small.
C: It is observed that the content slips down, but the amount of the content adhering to the packaging material film is large.
D: It is not observed that the content slips down.

<Surface property evaluation of first resin layer>

(Water sliding angle measurement)

The pouch used in the slip-down property evaluation of the content was washed with water, and the moisture content was dried. A drop of water at room temperature was dropped on the first resin layer (on the oil film) on the inner surface of the pouch, and an angle at which the drop of water began to move was measured using a sliding angle meter. The same measurement was performed three times while changing the package body 300, and the average value thereof was regarded as a sliding angle (°). Results are shown in Table 1 and Table 2.

Measuring apparatus: simple contact angle meter DSA25 manufactured by KRUSS GmbH
Liquid amount: 20 μL
Speed: 90°/min

(Oil film amount measurement)

The pouch used in the slip-down property evaluation of the content was washed with water, and the moisture content was dried. Two packaging materials constituting the pouch were cut into a size of 10 cm in length × 10 cm in width, and the weight of each piece with the oil film attached was measured to determine a total weight "a". Then, the surface of the first resin layer was wiped off with isopropyl alcohol (IPA) and dried sufficiently, and then the weight of each piece with the oil film removed was measured to determine a total weight "b". Then, a difference (a - b) between "a" and "b" was calculated. This operation was performed three times while changing the package body 300, and the average value thereof was regarded as an oil film amount (g/200 cm$^2$). Results are shown in Table 1 and Table 2.

[Table 1]

| First invention | Polyolefin resin | First resin layer | | | | | | | | | Second resin layer | Slip-down property of content | | |
| | Mixing ratio [A1/A2] | Filler | | | | Elastomer | | Layer thickness [μm] | Sliding angle [°] | Oil film amount [g/200 cm²] | | Average residual liquid ratio [%] | | Appearance |
| | | Type | | Particle diameter [μm] | Added amount [% by mass] | Type | Content percentage [% by mass] | | | | | | | |
|---|---|---|---|---|---|---|---|---|---|---|---|---|---|---|
| Experimental Example 1 | 50/50 | B1 | Non-porous | 3 | 5 | - | - | 15 | 20 | 0.12 | A3 | 9.5 | C | C |
| Experimental Example 2 | 50/50 | B2 | Non-porous | 5 | 5 | - | - | 15 | 19 | 0.14 | A3 | 8.9 | C | C |
| Experimental Example 3 | 50/50 | B3 | Non-porous | 10 | 5 | - | - | 15 | 18 | 0.18 | A3 | 7.3 | B | C |
| Experimental Example 4 | 50/50 | B4 | Non-porous | 10 | 1 | - | - | 15 | 18 | 0.18 | A3 | 7.2 | B | C |
| Experimental Example 5 | 50/50 | B4 | Non-porous | 10 | 20 | - | - | 15 | 5 | 1.25 | A3 | 8.4 | C | C |
| Experimental Example 6 | 50/50 | B5 | Non-porous | 10 | 2 | - | - | 15 | 19 | 0.16 | A3 | 8.3 | C | C |
| Experimental Example 7 | 50/50 | B6 | Non-porous | 5 | 5 | - | - | 15 | 19 | 0.14 | A3 | 8.8 | C | C |
| Experimental Example 8 | 50/50 | B7 | Non-porous | 4 | 5 | - | - | 15 | 20 | 0.10 | A3 | 9.1 | C | C |
| Experimental Example 9 | 50/50 | B2 | Non-porous | 5 | 10 | - | - | 15 | 15 | 0.25 | A3 | 7.8 | B | C |
| Experimental Example 10 | 50/50 | B4 | Non-porous | 10 | 5 | - | - | 15 | 14 | 0.30 | A3 | 6.8 | B | B |
| Experimental Example 11 | 50/50 | B4 | Non-porous | 10 | 10 | - | - | 15 | 16 | 0.22 | A3 | 7.9 | B | C |
| Experimental Example 12 | 50/50 | B7 | Non-porous | 4 | 10 | - | - | 15 | 16 | 0.25 | A3 | 7.8 | B | C |

| First invention | First resin layer | | | | | | | | | | | Second resin layer | Slip-down property of content | | |
| | Polyolefin resin | Filler | | | | Elastomer | | Layer thick-ness [μm] | Sliding angle [°] | Oil film amount [g/ 200 cm²] | | | Average residual liquid ratio [%] | | Appearance |
| | Mixing ratio [A1/A2] | Type | | Particle di-ameter [μm] | Added amount [% by mass] | Type | Content percentage [% by mass] | | | | | | | | |
| Experimental Example 13 | 50/50 | B8 | Non-porous | 10 | 5 | - | - | 15 | 14 | 0.28 | | A3 | 7.0 | B | C |
| Experimental Example 14 | 50/50 | B8 | Non-porous | 10 | 10 | - | - | 15 | 14 | 0.29 | | A3 | 6.9 | B | B |
| Experimental Example 15 | 50/50 | B9 | Porous | 7 | 5 | - | - | 15 | 12 | 0.50 | | A3 | 6.0 | A | A |
| Experimental Example 16 | 50/50 | B9 | Porous | 7 | 10 | - | - | 15 | 14 | 0.30 | | A3 | 6.8 | B | B |

EP 4 299 466 A1

[Table 2]

| First invention | First resin layer | | | | | | | | | Second resin layer | Slip-down property of content | |
|---|---|---|---|---|---|---|---|---|---|---|---|---|
| | Polyolefin resin | Filler | | | Elastomer | | Layer thickness [μm] | Sliding angle [°] | Oil film amount [g/200 cm²] | | Average residual liquid ratio [%] | Appearance |
| | Mixing ratio [A1/A2] | Type | Particle diameter [μm] | Added amount [% by mass] | Type | Content percentage [% by mass] | | | | | | |
| Experimental Example 17 | 50/50 | B9 Porous | 7 | 15 | - | - | 15 | 14 | 0.30 | A3 | 6.9 | B |
| Experimental Example 18 | 50/50 | B9 Porous | 7 | 10 | - | - | 7 | 12 | 0.60 | A3 | 5.8 | A |
| Experimental Example 19 | 50/50 | B9 Porous | 7 | 20 | - | - | 7 | 10 | 0.80 | A3 | 5.5 | A |
| Experimental Example 20 | 50/50 | B10 Porous | 12 | 5 | - | - | 15 | 10 | 0.75 | A3 | 5.6 | A |
| Experimental Example 21 | 50/50 | B10 Porous | 12 | 10 | - | - | 7 | 8 | 0.88 | A3 | 5.2 | A |
| Experimental Example 22 | 50/50 | B9 Porous | 7 | 5 | C1 | 10 | 15 | 6 | 1.10 | A3 | 4.9 | A |
| Experimental Example 23 | 50/50 | B9 Porous | 7 | 5 | C2 | 10 | 15 | 7 | 1.00 | A3 | 5.1 | A |
| Experimental Example 24 | 50/50 | B9 Porous | 7 | 5 | C3 | 10 | 15 | 8 | 0.90 | A3 | 5.2 | A |
| Experimental Example 25 | 50/50 | B9 Porous | 7 | 10 | C1 | 10 | 15 | 11 | 0.70 | A3 | 5.7 | A |
| Experimental Example 26 | 50/50 | B9 Porous | 7 | 15 | C1 | 10 | 7 | 12 | 0.50 | A3 | 5.9 | A |
| Experimental Example 27 | 50/50 | B10 Porous | 12 | 5 | C1 | 10 | 15 | 8 | 1.00 | A3 | 5.1 | A |
| Experimental Example 28 | 50/50 | B10 Porous | 12 | 10 | C1 | 10 | 7 | 5 | 1.15 | A3 | 4.8 | A |

| First invention | First resin layer | | | | | | | | | | Second resin layer | Slip-down property of content | | |
|---|---|---|---|---|---|---|---|---|---|---|---|---|---|---|
| | Polyolefin resin | Filler | | | | Elastomer | | Layer thickness [$\mu$m] | Sliding angle [°] | Oil film amount [g/ 200 cm$^2$] | | Average residual liquid ratio [%] | | Appearance |
| | Mixing ratio [A1/A2] | Type | | Particle diameter [$\mu$m] | Added amount [% by mass] | Type | Content percentage [% by mass] | | | | | | | |
| Experimental Example 29 | 50/50 | - | - | - | - | - | - | 15 | 30 | 0.10 | A3 | 12.5 | D | D |
| Experimental Example 30 | 50/50 | - | - | - | - | - | - | 15 | 25 | 0.10 | A3 | 11.7 | D | D |
| Experimental Example 31 | 50/50 | B11 | Non-porous | 2 | 0.5 | - | - | 15 | 25 | 0.12 | A3 | 12.1 | D | D |

[Table 3]

| Second invention | First resin layer | | | | | | | | | | | | | | Second resin layer | Slip-down property of content | |
| | Polyolefin resin | Filler | | | | Elastomer | | Layer thickness [μm] | Sa X [μm] | Surface area ratio Y | Y/X [/μm] | Projected area ratio [%] | | | Average residual liquid ratio [%] | Appearance |
| | Mixing ratio [A1/A2] | Type | | Particle diameter [μm] | Added amount [% by mass] | Type | Content percentage [% by mass] | | | | | | | | | |
|---|---|---|---|---|---|---|---|---|---|---|---|---|---|---|---|---|
| Experimental Example 1 | 50/50 | B1 | Non-porous | 3 | 5 | - | - | 15 | 0.13 | 1.004 | 7.7 | 4.9 | | A3 | 9.5 | C | C |
| Experimental Example 2 | 50/50 | B2 | Non-porous | 5 | 5 | - | - | 15 | 0.17 | 1.005 | 5.9 | 6.3 | | A3 | 8.9 | C | C |
| Experimental Example 3 | 50/50 | B3 | Non-porous | 10 | 5 | - | - | 15 | 0.27 | 1.009 | 3.8 | 7.3 | | A3 | 7.3 | B | C |
| Experimental Example 4 | 50/50 | B4 | Non-porous | 10 | 1 | - | - | 15 | 0.23 | 1.008 | 4.3 | 6.9 | | A3 | 7.2 | B | C |
| Experimental Example 5 | 50/50 | B4 | Non-porous | 10 | 20 | - | - | 15 | 1.39 | 1.091 | 0.8 | 48.2 | | A3 | 8.4 | C | C |
| Experimental Example 6 | 50/50 | B5 | Non-porous | 10 | 2 | - | - | 15 | 0.18 | 1.003 | 5.7 | 4.8 | | A3 | 8.3 | C | C |
| Experimental Example 7 | 50/50 | B6 | Non-porous | 5 | 5 | - | - | 15 | 0.17 | 1.006 | 6.0 | 6.3 | | A3 | 8.8 | C | C |
| Experimental Example 8 | 50/50 | B7 | Non-porous | 4 | 5 | - | - | 15 | 0.14 | 1.004 | 7.1 | 5.2 | | A3 | 9.1 | C | C |
| Experimental Example 9 | 50/50 | B2 | Non-porous | 5 | 10 | - | - | 15 | 0.29 | 1.017 | 3.5 | 11.8 | | A3 | 7.8 | B | C |
| Experimental Example 10 | 50/50 | B4 | Non-porous | 10 | 5 | - | - | 15 | 0.50 | 1.024 | 2.1 | 15.7 | | A3 | 6.8 | B | B |
| Experimental Example 11 | 50/50 | B4 | Non-porous | 10 | 10 | - | - | 15 | 0.85 | 1.052 | 1.2 | 30.3 | | A3 | 7.9 | B | C |

EP 4 299 466 A1

(continued)

| Second invention | Polyolefin resin Mixing ratio [A1/A2] | First resin layer | | | | | | | | | | | | Second resin layer | Slip-down property of content | | |
|---|---|---|---|---|---|---|---|---|---|---|---|---|---|---|---|---|---|
| | | Filler | | | | Elastomer | | Layer thickness [μm] | Sa X [μm] | Surface area ratio Y | Y/X [/μm] | Projected area ratio [%] | | | Average residual liquid ratio [%] | | Appearance |
| | | | Type | Particle diameter [μm] | Added amount [% by mass] | Type | Content percentage [% by mass] | | | | | | | | | | |
| Experimental Example 12 | 50/50 | B7 | Non-porous | 4 | 10 | - | - | 15 | 0.23 | 1.010 | 4.4 | 8.2 | A3 | 7.8 | B | C |
| Experimental Example 13 | 50/50 | B8 | Non-porous | 10 | 5 | - | - | 15 | 0.26 | 1.014 | 3.9 | 10.2 | A3 | 7.0 | B | C |
| Experimental Example 14 | 50/50 | B8 | Non-porous | 10 | 10 | - | - | 15 | 0.42 | 1.016 | 2.4 | 11.5 | A3 | 6.9 | B | B |
| Experimental Example 15 | 50/50 | B9 | Porous | 7 | 5 | - | - | 15 | 0.35 | 1.014 | 2.9 | 12.1 | A3 | 6.0 | A | A |
| Experimental Example 16 | 50/50 | B9 | Porous | 7 | 10 | - | - | 15 | 0.68 | 1.043 | 1.5 | 29.8 | A3 | 6.8 | B | B |

[Table 4]

| Second invention | Polyolefin resin | First resin layer | | | | | | | | | | | | Second resin layer | Slip-down property of content | | |
|---|---|---|---|---|---|---|---|---|---|---|---|---|---|---|---|---|---|
| | Mixing ratio [A1/A2] | Filler | | | | Elastomer | | Layer thickness [μm] | Sa X [μm] | Surface area ratio Y | Y/X [/μm] | Projected area ratio [%] | | | Average residual liquid ratio [%] | | Appearance |
| | | Type | | Particle diameter [μm] | Added amount [% by mass] | Type | Content percentage [% by mass] | | | | | | | | | | |
| Experimental Example 17 | 50/50 | B9 | Porous | 7 | 15 | - | - | 15 | 0.90 | 1.068 | 1.2 | 41.7 | | A3 | 6.9 | B | B |
| Experimental Example 18 | 50/50 | B9 | Porous | 7 | 10 | - | - | 7 | 0.47 | 1.028 | 22 | 20.0 | | A3 | 5.8 | A | A |
| Experimental Example 19 | 50/50 | B9 | Porous | 7 | 20 | - | - | 7 | 0.77 | 1.071 | 1.4 | 35.8 | | A3 | 5.5 | A | A |
| Experimental Example 20 | 50/50 | B10 | Porous | 12 | 5 | - | - | 15 | 0.48 | 1.020 | 2.1 | 14.5 | | A3 | 5.6 | A | A |
| Experimental Example 21 | 50/50 | B10 | Porous | 12 | 10 | - | - | 7 | 054 | 1.031 | 1.9 | 20.6 | | A3 | 5.2 | A | A |
| Experimental Example 22 | 50/50 | B9 | Porous | 7 | 5 | C1 | 10 | 15 | 0.42 | 1.020 | 2.4 | 13.7 | | A3 | 4.9 | A | A |
| Experimental Example 23 | 50/50 | B9 | Porous | 7 | 5 | C2 | 10 | 15 | 0.40 | 1.015 | 2.5 | 131 | | A3 | 5.1 | A | A |
| Experimental Example 24 | 50/50 | B9 | Porous | 7 | 5 | C3 | 10 | 15 | 0.39 | 1.018 | 2.6 | 12.8 | | A3 | 5.2 | A | A |
| Experimental Example 25 | 50/50 | B9 | Porous | 7 | 10 | C1 | 10 | 15 | 0.71 | 1.045 | 1.5 | 30.3 | | A3 | 5.7 | A | A |
| Experimental Example 26 | 50/50 | B9 | Porous | 7 | 15 | C1 | 10 | 7 | 0.55 | 1.039 | 1.9 | 268 | | A3 | 5.9 | A | A |
| Experimental Example 27 | 50/50 | B10 | Porous | 12 | 5 | C1 | 10 | 15 | 0.51 | 1.021 | 2.0 | 14.6 | | A3 | 5.1 | A | A |

EP 4 299 466 A1

(continued)

| Second invention | First resin layer | | | | | | | | | | | | Second resin layer | Slip-down property of content | | |
|---|---|---|---|---|---|---|---|---|---|---|---|---|---|---|---|---|
| | Polyolefin resin | Filler | | | | Elastomer | | Layer thickness [μm] | Sa X [μm] | Surface area ratio Y | Y/X [/μm] | Projected area ratio [%] | | Average residual liquid ratio [%] | | Appearance |
| | Mixing ratio [A1/A2] | Type | | Particle diameter [μm] | Added amount [% by mass] | Type | Content percentage [% by mass] | | | | | | | | | |
| Experimental Example 28 | 50/50 | B10 | Porous | 12 | 10 | C1 | 10 | 7 | 0.60 | 1.036 | 1.7 | 22.7 | A3 | 4.8 | A | A |
| Experimental Example 29 | 50/50 | - | - | - | - | - | - | 15 | 0.07 | 1.000 | 13.4 | - | A3 | 12.5 | D | D |
| Experimental Example 30 | 50/50 | - | - | - | - | - | - | 15 | 0.28 | 1.026 | 3.7 | - | A3 | 109 | D | D |
| Experimental Example 31 | 50/50 | - | - | - | - | - | - | 15 | 3.49 | 1.440 | 0.41 | - | A3 | 11.7 | D | D |
| Experimental Example 32 | 50/50 | B11 | Non-porous | 2 | 0.5 | - | - | 15 | 0.08 | 1.000 | 12.5 | - | A3 | 12.1 | D | D |
| Experimental Example 33 | 50/50 | B12 | Non-porous | 30 | 8 | - | - | 15 | 268 | 1.038 | 0.39 | - | A3 | 113 | D | D |

EP 4 299 466 A1

From the results shown in Table 1 and Table 2, in the package bodies obtained in Experimental Examples 1 to 28 (Examples), the average residual liquid ratio was small, and in appearance, it was observed that the content slipped down. On the other hand, in the package bodies obtained in Experimental Examples 29 to 31 (Comparative Examples), the average residual liquid ratio was large, and in appearance, it was not observed that the content slipped down.

From the results shown in Table 3 and Table 4, in the package bodies obtained in Experimental Examples 1 to 28 (Examples), the average residual liquid ratio was small, and in appearance, it was observed that the content slipped down. On the other hand, in the package bodies obtained in Experimental Examples 29 to 33 (Comparative Examples), the average residual liquid ratio was large, and in appearance, it was not observed that the content slipped down.

As described above, according to the packaging material film of the present invention, it was confirmed that excellent slip-down property can be imparted to the oil-in-water dispersion-type content by the heating treatment.

**Reference Signs List**

10: substrate, 20: packaging material film, 21: first resin layer, 21a: resin composition, 21b: filler, 30: adhesive layer, 100: packaging material, 200: packaging bag, 300: package body, C: content, $C_O$: oil content, S: surface of first resin layer, $F_O$: oil film.

**Claims**

1.    A packaging material film comprising:

   a first resin layer containing a polyolefin resin and fillers,
   wherein protrusions are formed on a surface of the first resin layer by the fillers, and
   a water sliding angle at room temperature of an oil film on the surface of the first resin layer as measured by the following measurement method is 20° or less.

   (Measurement method)

   a) A packaging bag, which is formed by using a packaging material including a substrate and the packaging material film provided on the substrate such that the first resin layer is disposed on an inner side thereof, is prepared.
   b) A package body including the packaging bag and an oil-in-water dispersion-type content enclosed in the packaging bag is prepared.
   c) The package body is subjected to a retort treatment and a boiling treatment.
   d) A water sliding angle at room temperature on an oil film formed on a surface of the first resin layer is measured using a contact angle meter under conditions of a liquid amount of 20 μL and a speed of 90°/min.

2.    The packaging material film according to claim 1, wherein an amount of the oil film is 0.2 to 1.2 g/200 cm$^2$.

3.    A packaging material film comprising:

   a first resin layer containing a polyolefin resin and fillers,
   wherein a ratio Y/X of a surface area ratio Y of a surface of the first resin layer with respect to an arithmetic mean height Sa X μm of the surface of the first resin layer is 0.4 to 8.0 μm$^{-1}$.

4.    The packaging material film according to claim 3,
   wherein a projected area ratio of protrusions formed by the fillers on the surface of the first resin layer is 8 to 45%.

5.    The packaging material film according to any one of claims 1 to 4, wherein the fillers include a porous filler.

6.    The packaging material film according to any one of claims 1 to 5, wherein the first resin layer further contains an elastomer component.

7.    A packaging material comprising:

   a substrate; and
   a packaging material film provided on the substrate,

wherein the packaging material film is composed of the packaging material film according to any one of claims 1 to 6, and
a surface of the first resin layer of the packaging material film on a side opposite to the substrate is exposed.

8. A packaging bag for containing an oil-in-water dispersion-type content,
the packaging bag being formed using the packaging material according to claim 7, the first resin layer being disposed on an inner side thereof.

9. A package body comprising:

the packaging bag according to claim 8; and
an oil-in-water dispersion-type content enclosed in the packaging bag.

*Fig.1*

# Fig.2

# Fig.3

**Fig.4**

(a)  (b)  (c)  (d)  (e)

## INTERNATIONAL SEARCH REPORT

| International application No. |
| --- |
| **PCT/JP2022/018431** |

| A. | CLASSIFICATION OF SUBJECT MATTER |
| --- | --- |

*B65D 65/40*(2006.01)i; *B65D 81/24*(2006.01)i; *B65D 81/34*(2006.01)i
FI:   B65D65/40 D; B65D81/24 J; B65D81/34 P

According to International Patent Classification (IPC) or to both national classification and IPC

| B. | FIELDS SEARCHED |
| --- | --- |

Minimum documentation searched (classification system followed by classification symbols)

   B65D65/40; B65D81/24; B65D81/34

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-14521 A (TOPPAN PRINTING CO LTD) 31 January 2019 (2019-01-31) paragraphs [0001]-[0002], [0013], [0024]-[0027], [0034]-[0038], [0044] | 3-5, 7 |
| Y | | 1-2, 5-9 |
| Y | JP 2016-150769 A (DAINIPPON PRINTING CO LTD) 22 August 2016 (2016-08-22) paragraphs [0001]-[0003], [0026]-[0028] | 1-2, 5-9 |
| Y | JP 2020-45473 A (TOPPAN PRINTING CO LTD) 26 March 2020 (2020-03-26) paragraphs [0001]-[0004], [0117]-[0118] | 1-2, 5-9 |
| Y | WO 2018/135476 A1 (TOYO SEIKAN CO., LTD.) 26 July 2018 (2018-07-26) paragraphs [0001]-[0003], [0034] | 2, 5-9 |
| Y | JP 2005-178217 A (TOYO BOSEKI) 07 July 2005 (2005-07-07) paragraphs [0001]-[0002], [0022]-[0023] | 6-9 |
| A | WO 2019/244752 A1 (TOPPAN PRINTING CO LTD) 26 December 2019 (2019-12-26) entire text, all drawings | 1-2, 5, 7-9 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 June 2022** | **05 July 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2022/018431**

### C.    DOCUMENTS CONSIDERED TO BE RELEVANT

| Category* | Citation of document, with indication, where appropriate, of the relevant passages | Relevant to claim No. |
|---|---|---|
| A | JP 11-1582 A (DAINIPPON PRINTING CO LTD) 06 January 1999 (1999-01-06) paragraphs [0001], [0009]-[0011] | 1 |

Form PCT/ISA/210 (second sheet) (January 2015)

## INTERNATIONAL SEARCH REPORT

International application No.

**PCT/JP2022/018431**

**Box No. III      Observations where unity of invention is lacking (Continuation of item 3 of first sheet)**

This International Searching Authority found multiple inventions in this international application, as follows:

Document 1: JP 11-1582 A (DAINIPPON PRINTING CO LTD) 06 January 1999 (1999-01-06) paragraphs [0001], [0009]-[0011] (Family: none)

Claims are classified into the two inventions below.

(Invention 1) Claims 1-2 and 5-9
Claims 1-2 and 5-9 have the special technical feature of a packaging material film comprising a first resin layer containing a polyolefin resin and a filler, wherein, on the surface of the first resin layer, a protrusion is formed by the filler, and a "falling angle of water at room temperature is 20° or less in an oil film on the surface of the first resin layer" as measured by a "specific measurement method" set forth in claim 1, and are thus classified as invention 1.
(Invention 2) Claims 3-4
Claims 3-4 and claim 1 classified as invention 1 share the common technical feature in that a "protrusion is formed on the surface of the first resin layer" in view of a "packaging material film comprising a first resin layer containing a polyolefin resin and a filler," wherein the ratio of the surface area rate of the surface to the arithmetic average height of the surface of the first resin layer is defined although it is not clear whether the protrusion is formed by the filler or not. However, said technical feature does not make a contribution over the prior art in light of the disclosure of document 1 (in particular, see paragraphs [0009]-[0010]), and thus cannot be said to be a special technical feature. Also, there are no other same or corresponding special technical features between claims 3-4 and claim 1.
In addition, claims 3-4 are not dependent on claim 1. Furthermore, claims 3-4 are not substantially identical to or similarly closely related to any of the claims classified as invention 1.
Therefore, claims 3-4 cannot be classified as invention 1.
In addition, claims 3-4 have the special technical feature of a "packaging material film comprising a first resin layer containing a polyolefin resin and a filler, wherein the ratio $Y/X$ of the surface area rate $Y$ of the surface of the first resin layer to the arithmetic average height $SaX$ $\mu m$ of the surface of the first resin layer is 0.4-8.0 $\mu m^{-1}$," and are thus classified as invention 2.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**      [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/018431**

| Patent document cited in search report | | | Publication date (day/month/year) | Patent family member(s) | | | Publication date (day/month/year) |
|---|---|---|---|---|---|---|---|
| JP | 2019-14521 | A | 31 January 2019 | (Family: none) | | | |
| JP | 2016-150769 | A | 22 August 2016 | (Family: none) | | | |
| JP | 2020-45473 | A | 26 March 2020 | US paragraphs [0001]-[0004], [0179]-[0187]<br>CN<br>KR | 2021/0309428<br><br>112703224<br>10-2021-0061993 | A1<br><br>A<br>A | |
| WO | 2018/135476 | A1 | 26 July 2018 | CA paragraphs [0001]-[0003], [0034]<br>KR<br>CN | 3048384<br><br>10-2019-0097203<br>110177689 | A1<br><br>A<br>A | |
| JP | 2005-178217 | A | 07 July 2005 | (Family: none) | | | |
| WO | 2019/244752 | A1 | 26 December 2019 | KR<br><br>CN<br>EP | 10-2021-0023854<br><br>112512803<br>3812147 | A<br><br>A<br>A | |
| JP | 11-1582 | A | 06 January 1999 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018003978 A